# EUROPEAN PATENT SPECIFICATION

(11) **EP 1 958 808 B1**
(45) Date of publication and mention of the grant of the patent: **29.04.2015**
(21) Application number: 07002967.3
(22) Date of filing: 13.02.2007
(51) Int. Cl.: B60J 3/02

(54) **Sun visor assembly, sun visor and method of assembling it**
Sonnenblendenkonstruktion, Sonnenblende und Montageverfahren dafür
Assemblage de pare-soleil, pare-soleil et son procédé d'assemblage

(43) Date of publication of application: 20.08.2008
(73) Proprietor: GRUPO ANTOLIN-INGENIERIA, S.A., 09007 Burgos (ES)
(72) Inventor: Richard, Stéphane, 88120 Vagney (FR); Bernard, Vincent, 88650 Anould (FR)
(74) Representative: Stiebe, Lars Magnus

(56) References cited:
- EP-A1- 1 306 252
- EP-A2- 0 275 903
- DE-A1- 3 324 169
- DE-U1- 20 217 313

## Description

### FIELD OF THE INVENTION

The invention relates to a sun visor assembly according to the preamble of claim 1. It further relates to a sun visor comprising such an assembly, and to a method of assembling a sun visor.

### STATE OF THE ART

In motor vehicles, sun visors are often provided in order to protect the driver from incoming sunlight. Often, a sun visor is also provided for the passenger sitting next to the driver. These sun visors are normally provided on a (substantially horizontal) shaft or similar so that they can be pivoted between a "non-operative" position (in which they do not protect the driver from incoming sunlight) and one or more "operative" positions, in which they prevent or substantially prevent the incoming light from arriving directly at the driver's (or passanger's) eyes. Also, often, the shaft can also be pivoted between a position in which it extends substantially parallel with the windscreen of the vehicle, and a position substantially aligned with a side window of the vehicle.

Often, these sun visors incorporate a mirror (sometimes referred to as a "vanity mirror") and a cover for the mirror. The cover can often be slid from a closed position (in which it covers the mirror) and an open position (in which it does not cover the mirror or, at least, leaves a substantial part of the mirror uncovered).

There exist at least two different basic technologies for producing this type of sun visors.

A first one of these technologies corresponds to sun visors based on one single moulded grid (made in some kind of plastic material), onto each major surface of which an external part comprising foam is applied. The assembly is then covered with some kind of cover, such as a textile cover. The external foam part can be made up of -or be based on- polyurethane, expanded polyethylene, etc.

In this kind of sun visors, the only structural member is the grid. Thus, the means for attaching or holding the mirror, as well as the means for holding the cover and for guiding it in its movement between its closed and its open position, are all embodied in the plastic grid part.

FR-A-2788730 discloses an example of this kind of sun visor, based on one single grid and two foamed elements applied onto its major surfaces. Rails are provided for guiding the mirror and the cover, and means are provided for retaining the mirror.

An alternative sun visor technology is based on the use of two shells, normally of some kind of plastic material, normally obtained by injection moulding. These two shells constitute, when assembled together, the structural element of the sun visor. Further, some kind of cover or lining is normally applied, as well as additional elements, such as the vanity mirror and its cover.

In this kind of "twin shell" sun visors, the means for holding the mirror and for guiding and holding the cover are conventionally established partly by one of the shells and partly by the other shell, so that it is the combination of the shells, when assembled together, that establishes the complete set of means (such as guide rails with guide grooves) for guiding and holding these elements in place. Now, this implies a rather complex assembly process, as the mirror and/or the cover will not be held appropriately in place until both shells have been assembled together. For example, the mirror and the cover can be placed on a first one of the shells, and then the other shell can be applied over said first shell, so that, once both shells have been duly interconnected, the mirror and the cover are trapped between the shells, with the longitudinal ends of the cover held within guide grooves along which the cover can slide.

In order to facilitate the process of assembly, an alternative "twin shell" technique involves the use of a mirror cartridge that, at some state of the assembly process, is coupled to the shells. This mirror cartridge holds the mirror and the cover and thus overcomes the difficulties involved with incorporating the mirror and the cover between the shells during the assembly process. Now, one of the shells will have to include additional guide means for guiding the cover in its movement between the open and the closed position, and said guide means must be correctly positioned with the cartridge.

DE-U-20217313 discloses a prior art twin shell structure with a cartridge for the mirror and the cover, wherein the upper shell is provided with guides for the cover. WO-A-2006/064027 discloses another example of a twin shell sun visor structure with a cartridge for holding the mirror and the cover, and wherein the guide means for guiding the cover are provided in the lower shell.

However, the cartridge is an additional component and thus implies further costs and logistic concerns. Also, the assembly of the shells will still remain complex, as it must be performed so as to allow the correct incorporation of the cartridge into the assembly, for example, so as to guarantee that the cartridge will be correctly aligned with the means for guiding the cover in its movement between its closed and its open position.

### DESCRIPTION OF THE INVENTION

A first aspect of the invention relates to a sun visor assembly comprising a first shell and a second shell arranged to be coupled together and comprising connection means (such as clips, surfaces to be welded together, and/or other conventional connection means) for keeping said first and second shells coupled together once they have been assembled to each other, so as to constitute a body structure of the sun visor. That is, basically, the invention relates to a so-called twin shell sun visor assembly.

According to the invention, the first shell comprises a first pair of guide rails for guiding a mirror along at least a part of said first shell to a mirror position (that is, to the position in which the mirror is to remain in the final product), and mirror retaining means (such as some kind of projections or ribs) for retaining said mirror in said mirror position. The first shell further comprises a second pair of guide rails for guiding a cover along at least a part of said first shell, to a position in which the cover is placed over the mirror so as to cover the mirror.

Said first pair of guide rails are further arranged to prevent movement of the mirror in a direction perpendicular to an inner major surface of the first shell, and said second pair of guide rails are further arranged to prevent movement of the cover in a direction perpendicular to said inner major surface of the first shell. This can be achieved by letting opposite edges (such as the longitudinal edges) of the mirror and cover slide in respective guide grooves in said guide rails.

In this way, the first shell itself comprises the means necessary for the correct positioning and sliding of the mirror and the cover. Thus, the way the cover slides, for example, will not depend on the exact manner in which the first shell ends up connected to the second shell, that is, for example, on the tolerances of the mutual contact surfaces of the first and the second shell or on the interaction between the means for interconnecting the shells. Thus, all the means necessary for the mounting of the mirror and the sliding of the cover are embodied in the first shell and can be defined by the way it is obtained in, for example, a mould.

Also, the way the mirror and the cover are assembled is facilitated: both items can easily be pre-mounted on the first shell, and subsequently the second shell can be mounted to the first shell. As the mirror is blocked in its position and as the cover is inserted into the corresponding guide rails and thus maintained in its position due to friction, assembly of the second shell to the first shell can be done easily, without any difficulty caused by any loose mirror or cover that require any special attention and consideration.

The invention is applicable both to non-electrical sun visors as well as to sun visors incorporating electrical devices such as light sources, etc.

The second shell can be provided with an opening arranged to be situated in correspondence with the mirror when said first shell and second shell are coupled together with a mirror in the mirror position. That is, the mirror will be visible through said opening, unless covered by the cover.

The second pair of guide rails can be placed on the first pair of guide rails and/or aligned with the first pair of guide rails.

The first and second pairs of guide rails can extend substantially longitudinally along an inner major surface of said first shell.

The first pair of guide rails can have a receiving end arranged to receive the mirror (for example, by insertion of opposite ends of the mirror into open ends of respective guide grooves of the guide rails), and said receiving end can be placed substantially in correspondence with a first shorter side of the first shell (for example, of a substantially rectangular shell), for example, at a distance from said shorter side that is less than 25% of the length of the shell.

The sun visor assembly can be arranged to be connected to a supporting arm in correspondence with (such as at a distance of less than 25% of the length of the first shell from) a second shorter side of the first shell, opposite to said first shorter side of said first shell. Thus, the mirror and the cover can be inserted from an end opposite to the one that incorporates the means for connection to the arm. This can make it easier to provide the necessary space for the guide rails and for the access to the guide rails by the mirror and cover, as, at the end at which the arm is to be connected to the cover, the relevant means for connecting the arm, including spring means etc., will make it more difficult to provide the necessary space.

The second pair of guide rails can have a receiving end arranged to receive the cover (for example, by insertion of opposite ends, such as opposite longitudinal ends, of the cover into open ends of respective guide grooves of the guide rails). The receiving end of said second pair of guide rails can be placed substantially in correspondence with a shorter side of the shell (for example, close to the receiving end of the first pair of guide rails, and/or at a distance from said shorter side of the shell that is less than 25% of the length of the shell).

The mirror retaining means can comprise one or more elements situated between the guide rails of said first pair of guide rails and arranged to allow the mirror to pass easily along said first pair of guide rails towards said mirror position, and to subsequently prevent the mirror from being moved along said first pair of guide rails in the opposite direction, from said mirror position (or, at least, substantially preventing the mirror to be moved from said mirror position, unless subjected to some kind of bending away from said elements). The element or elements can comprise at least one projection extending upwards from said inner major surface of the first shell, between the guide rails of said first pair of guide rails, such as two or more projections. The projection or projections can be in the form of so-called dolphin clips, that allow the mirror to easily pass over the projection(s) in one direction, and that subsequently prevent the mirror from returning in the opposite direction (unless subjected to special bending forces).

The sun visor assembly can further comprise a frame arranged to be applied over an outer surface of said second shell in correspondence with said opening, and said frame can comprise attachment means arranged to interact with complementary attachment means forming part of said first shell (such as attachment means arranged on the outer sides of the guide rails, such as projections or similar), so as to attach said frame to said first shell, thus further contributing to interlocking the first and the second shells.

The second shell can comprises at least one blocking element -such as one or more projections or ribs extending from the major inner surface of the second shell- arranged to prevent the cover from moving more than a predetermined distance away from the mirror position, when the sun visor is assembled with said cover arranged in said second pair of guide rails and with said second shell assembled to said first shell.

The first shell can further comprise means (such as a transversal rib or wall) for preventing the mirror and the cover from being moved further than to a predetermined position (such as the mirror position) along the respective pairs of guide rails, in a direction of insertion of said mirror and cover into said pairs of guide rails.

The second shell can further comprise one or more support ribs arranged to support said cover, by abutting against the outer surface thereof, when the cover is displaced away from the position in which it covers the mirror (that is, the closed position), so as to further prevent it from moving in a direction perpendicular to said inner major surface of the first shell, in order to reduce vibrations and/or noise caused by the cover when it is in its open position.

Both shells can be plastic elements obtained by moulding.

The first shell, including said first pair of guide rails and said second pair of guide rails, can be a single moulded component, with the corresponding advantages as suggested above.

A further aspect of the invention relates to a sun visor, comprising said first and second shells of the sun visor assembly described above, assembled together, with a mirror arranged in said mirror position in said first pair of guide rails, and with a cover arranged in said second pair of guide rails.

The mirror can further be adhered to said first shell (for example, to ribs of said first shell abutting against a rear surface of the mirror) by an adhesive.

The sun visor can further comprise a frame for the mirror opening, arranged in correspondence with an outer surface of the second shell and attached to the first shell through said opening in the second shell in correspondence with the mirror.

A further aspect of the invention relates to a method of assembling a sun visor, comprising the steps of:
inserting a mirror into the first pair of guide rails of the first shell of a sun visor assembly as described above, and sliding the mirror to the mirror position in which it is retained by said mirror retaining means;
inserting a cover into the second pair of guide rails of said first shell and sliding it until it is placed above the mirror;
attaching said second shell of said sun visor assembly to said first shell.

The method can further comprise the step of applying a frame in correspondence with an opening in said second shell, so that said frame is attached to said first shell by attachment means associated with said frame and said first shell, respectively.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:
Figure 1.- Shows a perspective view of the assembly according to a preferred embodiment of the invention.
Figures 2A-2J.- Schematically illustrate different steps of a process of assembling a sun visor in accordance with said embodiment of the invention.
Figures 3A and 3B.- Schematically illustrate the dolphin clips and the way they retain the mirror.
Figure 4.- Shows a longitudinal cross section of the assembly, in accordance with said preferred embodiment of the invention.
Figure 5.- Shows a transversal cross section of said assembly.
Figure 6.- Shows a top view of the first shell in accordance with said preferred embodiment of the invention.

### DESCRIPTION OF A PREFERRED EMBODIMENT OF THE INVENTION

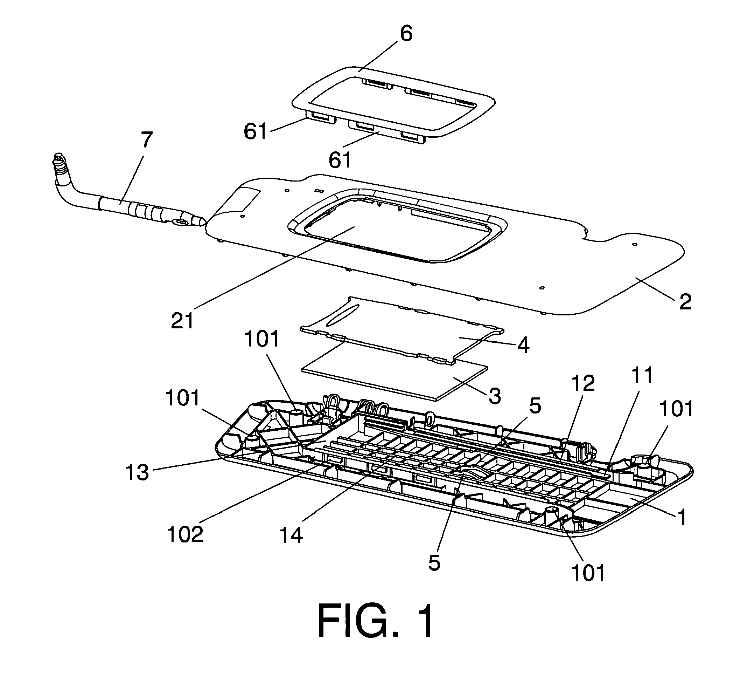

Figure 1 schematically illustrates a sun visor assembly comprising a first shell 1 and a second shell 2, both being plastic components obtained by injection moulding. Each one of the shells comprises connection means such as clips 101, recesses and/or other mechanical means for interconnecting the first shell and the second shell. Such connection means are well known in the art and it is not considered necessary to describe them here with more detail. For example, any of the connection means (such as clips or welding) conventionally used for interconnecting the shells of a twin shell sun visor can be used.

Each shell is substantially rectangular and planar, and features a plurality of reinforcing ribs and projections along the inner major surface of the shell.

Now, the first shell is provided with two pairs of guide rails in correspondence with its inner major surface, namely, with a first pair of guide rails 11 for sliding a mirror and with a second pair of guide rails 12 for sliding a cover. Both pairs of guide rails have a receiving portion or end arranged to receive the mirror and the cover, respectively, in correspondence with one of the shorter ends of the shell (for example, at a distance X from the corresponding shorter end, X being less than 25% of the length of the shell). The rails comprise guide grooves arranged so that the mirror and the cover can only slide along the respective rails, that is, in a direction substantially parallel to the inner major surface of the shell. That is, when the mirror 3 and the cover 4 have been inserted into the respective guide grooves of the respective pair of guide rails, they cannot any longer be displaced in a direction away from -such as perpendicularly to- said inner major surface.

The first pair of guide rails extends longitudinally over the inner major surface of the first shell, from a position close to one of the shorter sides of the first shell and until a transversal rib or wall 13 arranged in the other half of the first shell (that is, in the half of the first shell that is remote from said shorter side close to which the first pair of guide rails start). This transversal wall 13 constitutes a surface against which the mirror abuts once it has been displaced all along the first pair of guide rails 11, arriving at the mirror position, that is, at its final position. That is, the movement of the mirror towards the left in figure 1 is limited by said transversal wall 13, at which the first pair of guide rails ends.

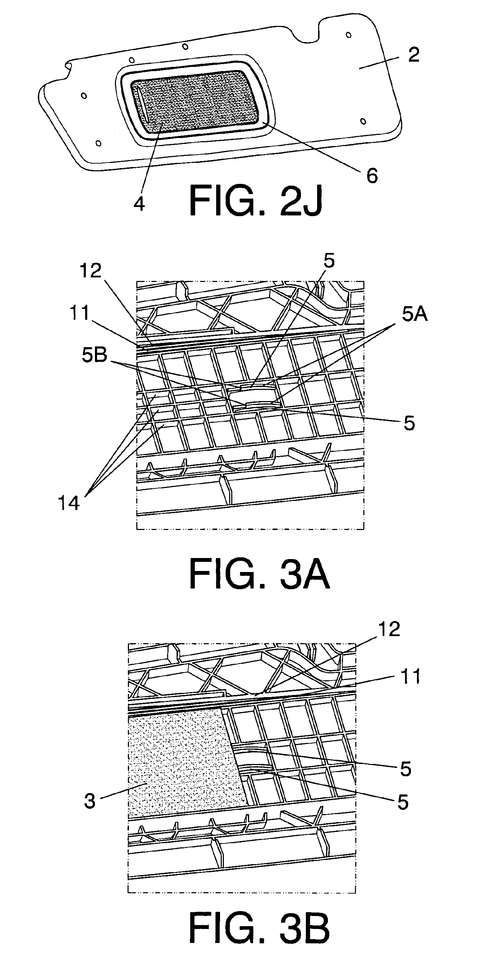

On the other hand, the first shell also includes mirror retaining means constituted by two so-called "dolphin" clips 5, which can be observed more in detail in figures 3A and 3B. Figure 3A illustrates how the dolphin clips 5 are arranged on the inner major surface of the first shell, between the two pairs of guide rails 11 and 12. The dolphin clips consist in protrusions having one slightly inclined edge 5A that allows a mirror 3 to pass over the clips in a first direction (that is, when moving towards the left in figures 3A and 3B), due to the flexibility of the clips, and one more vertical edge 5B (that is, en edge substantially perpendicular to the inner major surface of the shell) against which the mirror abuts once it has arrived at the mirror position, as illustrated in figure 3B, so as to prevent the mirror from accidentally being displaced away from the mirror position (that is, for preventing it from accidentally moving towards the right in figure 3B).

On the other hand, figure 1 (cf. also figures 3A and 3B) illustrates how the second pair of guide rails 12 extends above the first pair of guide rails, from a receiving end arranged close to a shorter side of the first shell 1, and until arriving at the transversal rib or wall 13. In figure 1 it can be observed how the receiving end of the second pair of guide rails 12 is placed a bit further away from the nearest short end than the receiving end of the first pair of guide rails 11, this in order to facilitate the insertion of the cover 4 in said second pair of guide rails 12 by placing it on top of the first pair of guide rails 11 and sliding it towards the left in figure 1, with the longitudinal edges of the cover 4 sliding in the respective grooves provided in the second pair of guide rails, until reaching the transversal wall 13.

The second shell 2 comprises connection means complementary to the clips 101 of the first shell, and is further provided with a substantially rectangular opening 21 arranged so that, when the second shell is assembled onto the first shell, said opening 21 is placed over the mirror position of the first shell, so that when the mirror 3 is housed in said mirror position, the mirror 3 is visible through said opening 21.

Further, the assembly comprises a frame 6 arranged to fit in said opening 21, covering its edges. The frame is provided with a plurality of attachment means 61 arranged to co-operate with complementary attachment means 102 provided on the first shell, so as to attach the frame 6 to said first shell, once the second shell has been coupled to the first shell and the frame has been assembled to the opening 21, with said attachment means 61 extending through the opening 21. The attachment means 61 on the frame 6 can comprise some kind of ribs or walls provided with openings into which some protrusions 102 arranged on the outer walls of the guide rails are arranged to enter when the frame 6 is mounted in the opening 21 during assembly.

Figure 1 also schematically illustrates the arm 7 on which the entire sun visor assembly can be mounted.

The two shells 1 and 2 are normally to be covered by some kind of cover or lining, such as by a PVC foil or any other kind of lining.

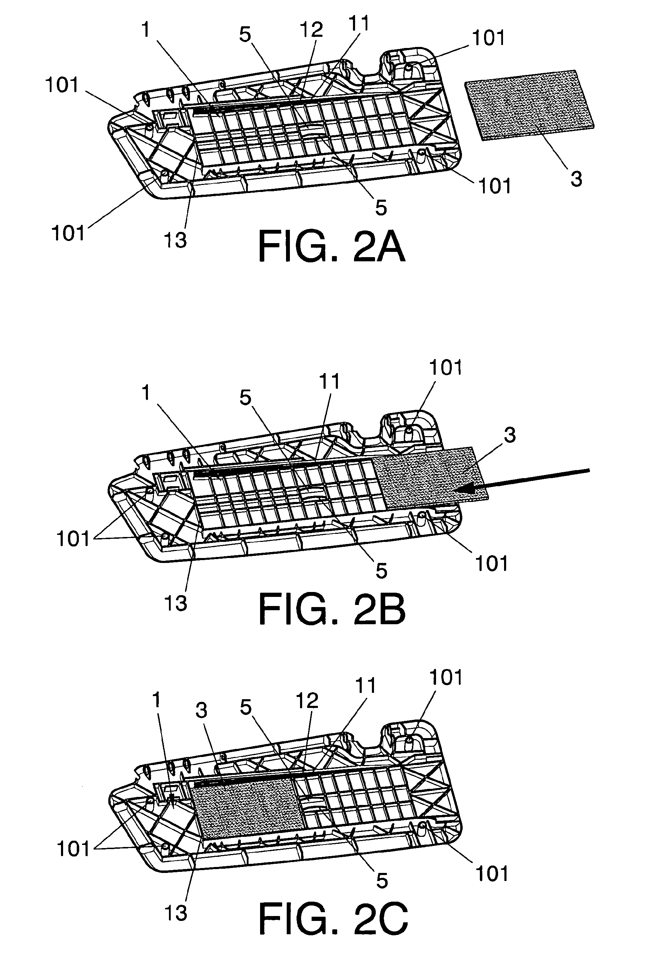

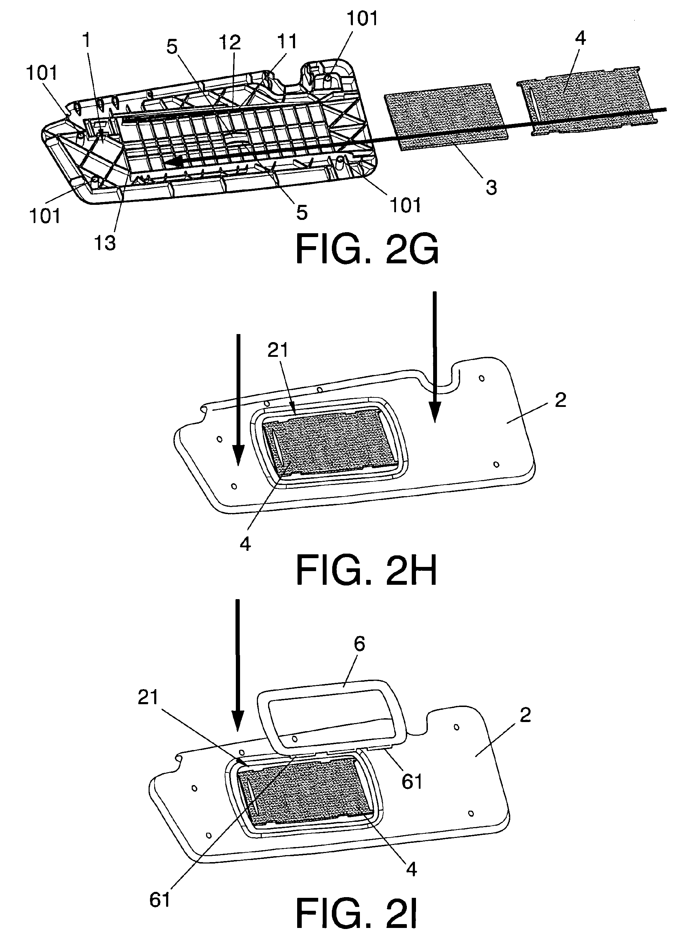

Figures 2A-2J schematically illustrate some steps of a process of assembly of a sun visor in accordance with the above described embodiment of the invention.

In figure 2A, the first shell 1 is placed on a support (not illustrated) and the mirror 3 is brought towards the receiving end of the first pair of guide rails 11, and subsequently (figure 2B) inserted into the guide grooves of said first pair of guide rails, and pushed along said first pair of guide rails until the mirror reaches the mirror position (figure 2C), in which one short end of the mirror substantially abuts against the transversal wall 13, whereas the opposite short end of the mirror abuts against the dolphin clips 5, so that the mirror is locked in this mirror position, between said transversal wall 13 and the dolphin clips 5. Also, below the mirror there are some ribs 14 (cf. figures 1 and 3A) that are in contact with the mirror and that produce a certain stress in the mirror, so as to prevent if from moving in any direction. That is, the first pair of guide rails prevent the mirror from moving towards the longer ends of the shell and from any substantial movement in a direction perpendicular to the main surface of the shell, whereas the transversal wall 13 and the dolphin clips prevent the mirror from moving along said guide rails, towards the shorter ends of the shell. The ribs below the mirror will help to prevent it from vibrating with respect to the shell, when the sun visor is in use. Also, the rear side of the mirror can be provided with an adhesive to further attach the mirror to the ribs below it.

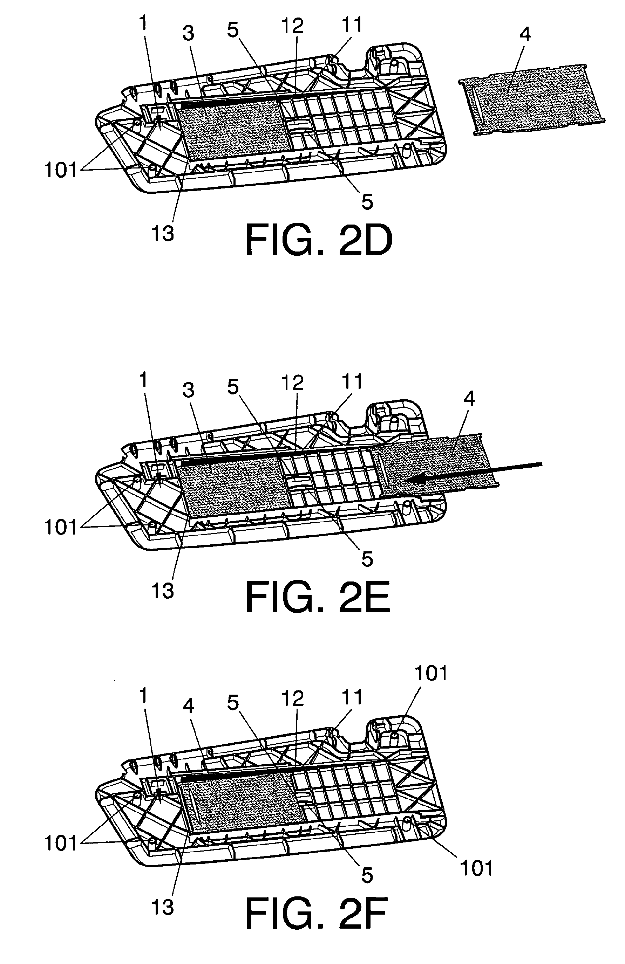

Subsequently, a cover 4 is brought towards said second pair of guide rails 12 (figure 2D) and inserted into said second pair of guide rails (figure 2E), so that the longitudinal edges of the cover 4 are inserted into the corresponding guide grooves of said second pair of guide rails 12, running parallel with the guide grooves of the first pair of guide rails 11. The cover is then slid along the second pair of guide rails 12, until it abuts against the transversal wall 13, covering the mirror (figure 2F).

(In accordance with an alternative method schematically illustrated in figure 2G, the mirror 3 and cover 4 can be inserted into the respective receiving ends of the respective pairs of guide rails 11 and 12 and then slid together towards the mirror position, that is, towards the transversal wall 13; this is possible because both elements, mirror and cover, are arranged to be assembled with the same kind of sliding movement).

Now, once the cover is in the position illustrated in figure 2F, it remains there unless subjected to an external force, due to the friction between the cover 4 and the second pair of guide rails. That is, there is no specific element provided for preventing the cover from being moved towards the right in figure 2F, that is, the first shell 1 does not comprise any "cover retaining means" equivalent to the dolphin clips 5 arranged to prevent the mirror from moving.

In the next step, illustrated in figure 2H, the second shell is mounted on top of the first shell and attached to the first shell due to the cooperation between the connection means or clips 101 of the first shell and complementary connection means (not illustrated, as they are conventional) of the second shell 2. In addition to or as an alternative to mechanical interlocking means, such as the clips 101, the first and second shells can be welded to each other.

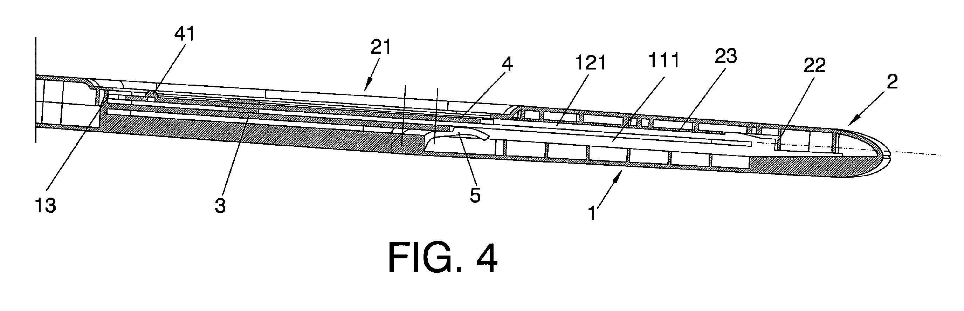

The cover 4, mounted in the first shell, is visible through the opening 21 in the second shell. The cover can thus be accessed through the opening 21 and displaced towards the right in figure 2H, until it reaches one or more blocking elements constituted by one or more ribs 22 on the inner surface of the second shell (cf. figure 4). This blocking element or rib 22 prevents the cover 4 from being displaced to a position in which it cannot any longer be easily accessed through the opening 21 in the second shell.

At this point of the assembly process, a cover or lining can be applied to the assembly, such as a PVC foil or similar.

Next, the frame 6 is mounted to the shells, so that the attachment means 61 of the frame are inserted along the respective edges of the opening 21, passing by the longitudinal edges of the cover 4, at the outside of the guide rails, until the projections 102 (cf. figure 1) on the outside of said guide rails fit into the respective openings in said attachment means 61 (illustrated in figure 1). Thus, the frame 6 abuts against the outer surface of the second shell 2, along the edges of the opening in said shell, and is further locked to the first shell 1, thus contributing to lock the two shells to each other without generating any stress on the second guide rail. That is, the assembly of the shells and the frame will not affect the way the lid can slide along the second pair of guide rails. The frame will hide the edge of the opening 21 and, normally, the cut edge of the lining or cover applied on the surface of the second shell, in correspondence with the opening 21.

Figure 4 schematically illustrates a longitudinal cross section of the assembly, and it can be seen how the mirror 3 is placed in the guide groove 111 of the first pair of guide rails 11, and how the cover 4 is placed in the guide groove 121 of the second pair of guide rails 12, whereby the mirror is locked between the transversal wall 13 and the dolphin clips 5, whereas the cover is limited in its longitudinal movement by said transversal wall 13 and, further, by a rib 22 extending substantially perpendicularly from the inner major surface of the second shell 2, thus preventing the lid to be slid to a position in which a grip rib 41 in the lid cannot be easily accessed by a user through the opening 21 in the second shell.

A plurality of longitudinal ribs (23) are further provided in order to support the cover, by abutting against the outer surface thereof, when the cover is in its open position. Thereby, vibration of the cover and the corresponding noise can be prevented or, at least, reduced.

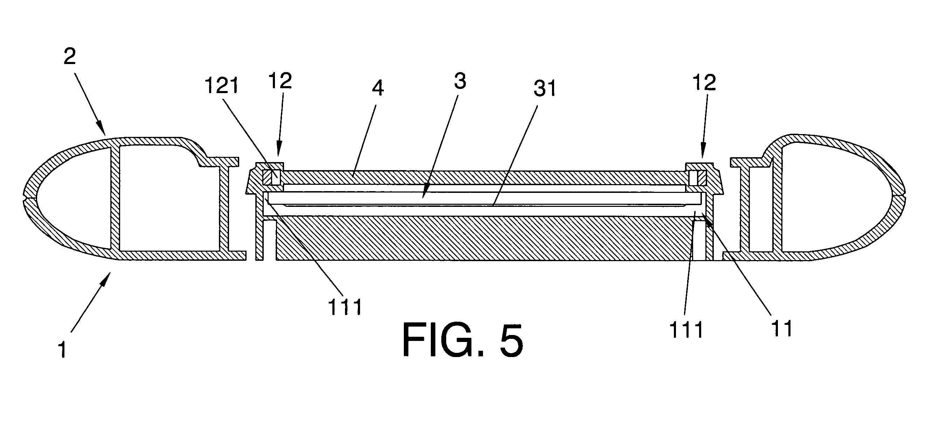

Figure 5 schematically illustrates a transversal cross section of the assembly, with the first shell 1 and second shell 2 coupled to each other, with the mirror 3 inserted into the guide groove 111 of the first pair of guide rails 11, and with the cover 4 inserted in the guide grooves 121 of the second pair of guide rails 12. The mirror 3 is provided with a layer of adhesive 31 so as to help to adhere it to some ribs provided between the guide rails and on which the mirror is arranged to rest (not illustrated in figure 5).

The fact that the guide rails are completely embodied on the first shell, assures that the first shell by itself provides all the means necessary for the mounting of the mirror and the sliding of the cover, that is, that these functions are not affected by the constitution of the second shell and by the way the second shell is mounted onto the first shell. Thereby, not only is the assembly process simplified, but also it is achieved that all the tolerances necessary for the correct sliding of the lid and the mounting of the mirror are related to the first shell and, thus, to the way it is obtained in the mould, and not to the way in which it is assembled to the second shell.

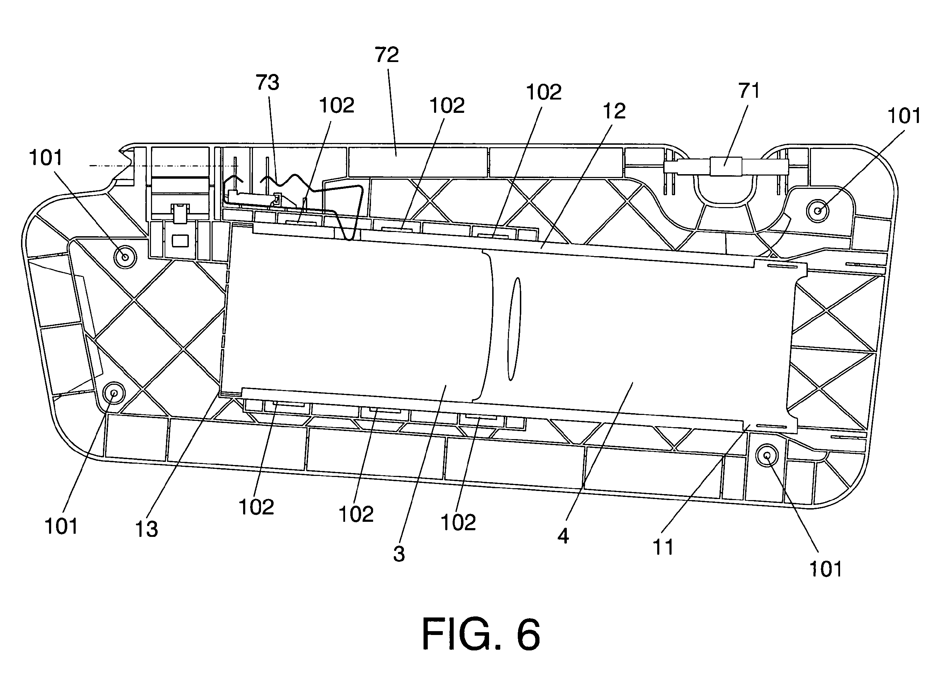

Figure 6 is a top view of the first shell, with the mirror 3 and cover 4 arranged in the corresponding pairs of guide rails 11 and 12 (the receiving end of the first pair of guide rails 11 extending a bit further towards the short end of the shell than the second pair of guide rails 12), and the transversal wall 13 abutting against the mirror 3. Figure 6 further illustrates the clips 101 for connecting the first shell to the second shell, and the clips or protrusions 102 arranged to enter into the respective openings of the attachment means 61 of the frame 1 (cf. for example figure 1). Further, there is a support 71 for receiving the end of the sun visor arm 7 (cf. figure 1), said arm being arranged to extend along a corresponding channel 72 provided for between the shells. A spring means 73 is also provided in the first shell, to cooperate with the arm 7.

Due to the means for attaching the sun visor to the sun visor arm 7, including spring means, etc., and/or to the way the clips 101 are arranged, it would not be possible to insert the mirror and cover into the rails from the left end (that is, from the left-most short side) of the shell in figure 6. That is one reason for which the receiving ends of the pairs of guide rails 11 and 12 are arranged in correspondence (that is, closer to) the opposite short side, namely, the right-most short side in figure 6.

Another reason for this is that is makes it possible to easily establish the cover and mirror stops 13 in the first shell and in the manufacturing step (by injection moulding), keeping the aim of integrating all the means for cover and mirror in said first shell.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Sun visor assembly comprising a first shell (1) and a second shell (2) arranged to be coupled together and comprising connection means (101) for keeping said first and second shells coupled together once they have been assembled to each other, so as to constitute a body structure of the sun visor;
whereby
said first shell (1) comprises a second pair of guide rails (12) for guiding a cover (4) along at least a part of said first shell, to a position in which the cover is placed over a mirror so as to cover the mirror,
wherein said second pair of guide rails are arranged to prevent movement of the cover in a direction perpendicular to an inner major surface of the first shell; **characterised in that** said first shell (1) further comprises a first pair of guide rails (11) for guiding the mirror (3) along at least a part of said first shell to a mirror position, and mirror retaining means (5) for retaining said mirror in said mirror position; wherein said first pair of guide rails (11) are arranged to prevent movement of the mirror in a direction perpendicular to said inner major surface of the first shell.

2. Sun visor assembly according to claim 1, wherein the second shell (2) is provided with an opening (21) arranged to be situated in correspondence with the mirror, when said first (1) and second (2) shells are coupled together with a mirror (3) in the mirror position.

3. Sun visor assembly according to any of the preceding claims, wherein the second pair of guide rails (12) is placed on the first pair of guide rails (11).

4. Sun visor assembly according to any of the preceding claims, wherein the second pair of guide rails (12) is aligned with the first pair of guide rails (11).

5. Sun visor assembly according to any of the preceding claims, wherein said first (11) and second (12) pairs of guide rails extend substantially longitudinally along an inner major surface of said first shell (1).

6. Sun visor assembly according to any of the preceding claims, wherein said first pair of guide rails (11) has a receiving end arranged to receive the mirror (3).

7. Sun visor assembly according to claim 6, wherein said receiving end of said first pair of guide rails (11) is placed substantially in correspondence with a first shorter side of the first shell (1).

8. Sun visor assembly according to claim 7, arranged to be connected to a supporting arm (7) in correspondence with a second shorter side of the first shell, opposite to said first shorter side of said first shell.

9. Sun visor assembly according to claim 8, wherein said second pair of guide rails (12) has a receiving end arranged to receive the cover, said receiving end of said second pair of guide rails (12) being placed substantially in correspondence with said first shorter side of the first shell.

10. Sun visor assembly according to any of the preceding claims, wherein said mirror retaining means (5) comprise at least one element situated between the guide rails of said first pair of guide rails (11) and arranged to allow the mirror to pass easily along said first pair of guide rails towards said mirror position, and to subsequently prevent the mirror from being moved along said first pair of guide rails from said mirror position.

11. Sun visor assembly according to clam 10, wherein said at least one element comprises at least one projection extending upwards from said inner major surface of the first shell, between the guide rails of said first pair of guide rails.

12. Sun visor assembly according to claim 11, wherein said at least one element comprises at least two projections.

13. Sun visor assembly according to any of claims 11 and 12, wherein said at least one projection comprises at least one dolphin clip.

14. Sun visor assembly according to any of the preceding claims when combined with claim 2, further comprising a frame (6) arranged to be applied over an outer surface of said second shell (2) in correspondence with said opening (21), said frame comprising attachment means (61) arranged to interact with complementary attachment means (102) forming part of said first shell (1), so as to attach said frame to said first shell (1).

15. Sun visor assembly according to any of the preceding claims, wherein said second shell (2) comprises at least one blocking element (22) arranged to prevent the cover from moving more than a predetermined distance away from the mirror position, when the sun visor is assembled with said cover arranged in said second pair of guide rails (12).

16. Sun visor assembly according to any of the preceding claims, wherein said first shell further comprises means (13) for preventing the mirror and the cover from being moved further than to a predetermined position along the respective pairs of guide rails (11, 12), in a direction of insertion of said mirror and cover into said pairs of guide rails.

17. Sun visor assembly according to any of the preceding claims, wherein said second shell (2) comprises at least one cover support rib (23) arranged to support said cover when the cover is displaced away from the position in which it covers the mirror, so as to further prevent it from moving in a direction perpendicular to said inner major surface of the first shell, in order to reduce vibrations and/or noise caused by the cover.

18. Sun visor assembly according to any of the preceding claims, wherein said first shell and said second shell both are plastic elements obtained by moulding.

19. Sun visor assembly according to any of the preceding claims, wherein said first shell, including said first pair of guide rails and said second pair of guide rails, is a single moulded component.

20. Sun visor, comprising said first and second shells of the sun visor assembly according to any of the preceding claims, assembled together, with a mirror arranged in said mirror position in said first pair of guide rails, and with a cover arranged in said second pair of guide rails.

21. Sun visor according to claim 20, with said mirror further being adhered to said first shell (1) by an adhesive (31).

22. Sun visor according to claim 20 or 21, further comprising a frame (6) arranged in correspondence with an outer surface of the second shell and attached to the first shell (1) through an opening (21) in the second shell in correspondence with the mirror.

23. Method of assembling a sun visor, comprising the steps:
inserting a mirror (3) into the first pair of guide rails (11) of the first shell (1) of a sun visor assembly according to any of claims 1-19, and sliding the mirror to a mirror position in which it is retained by said mirror retaining means (5);
inserting a cover into the second pair of guide rails (12) of said first shell and sliding it until it is placed above the mirror; and
attaching said second shell (2) of said sun visor assembly to said first shell.

24. Method according to claim 23, further comprising the step of applying a frame (6) in correspondence with an opening (21) in said second shell, so that said frame is attached to said first shell (1) by attachment means (61, 102) associated with said frame and said first shell, respectively.

## Patentansprüche

1. Sonnenblendenbaugruppe, aufweisend eine erste Schale (1) und eine zweite Schale (2), die ausgebildet sind, um miteinander verbunden zu werden, und aufweisend eine Verbindungseinrichtung (101), um die erste und die zweite Schale miteinander verbunden zu halten, sobald sie zusammengebaut wurden, so dass eine Körperstruktur der Sonnenblende gebildet wird; wobei
die erste Schale (1) ein zweites Paar von Führungsschienen (12) aufweist, um eine Abdeckung (4) entlang zumindest einem Teil der ersten Schale zu führen, und zwar in eine Position, in der die Abdeckung über einem Spiegel platziert ist, so dass der Spiegel verdeckt wird, wobei
das zweite Paar von Führungsschienen ausgebildet ist, um eine Bewegung der Abdeckung in Richtung senkrecht zu einer inneren Hauptfläche der ersten Schale zu verhindern; **dadurch gekennzeichnet, dass** die erste Schale (1) weiter ein erstes Paar von Führungsschienen (11), um den Spiegel (3) entlang zumindest einem Teil der ersten Schale zu einer Spiegelposition zu führen, und eine Spiegelrückhalteeinrichtung (5) aufweist, um den Spiegel in der Spiegelposition zurückzuhalten; wobei das erste Paar von Führungsschienen (11) ausgebildet ist, um eine Bewegung des Spiegels in Richtung senkrecht zu der inneren Hauptfläche der ersten Schale zu verhindern.

2. Sonnenblendenanordnung nach Anspruch 1, wobei die zweite Schale (2) mit einer Öffnung (21) versehen ist, die angeordnet ist, um sich korrespondierend zum Spiegel zu befinden, wenn die erste (1) und die zweite Schale (2) miteinander verbunden sind, mit einem Spiegel (3) in der Spiegelposition.

3. Sonnenblendenbaugruppe nach einem der vorhergehenden Ansprüche, wobei das zweite Paar von Führungsschienen (12) auf dem ersten Paar von Führungsschienen (11) platziert ist.

4. Sonnenblendenbaugruppe nach einem der vorhergehenden Ansprüche, wobei das zweite Paar von Führungsschienen (12) fluchtend zu dem ersten Paar von Führungsschienen (11) angeordnet ist.

5. Sonnenblendenbaugruppe nach einem der vorhergehenden Ansprüche, wobei die ersten (11) und die zweiten Paare (12) von Führungsschienen sich im Wesentlichen in Längsrichtung entlang einer inneren Hauptfläche der ersten Schale (1) erstrecken.

6. Sonnenblendenbaugruppe nach einem der vorhergehenden Ansprüche, wobei das erste Paar von Führungsschienen (11) ein Aufnahmeende aufweist, das ausgebildet ist, um den Spiegel (3) aufzunehmen.

7. Sonnenblendenbaugruppe nach Anspruch 6, wobei das Aufnahmeende des ersten Paares von Führungsschienen (11) im Wesentlichen korrespondierend zu einer ersten kürzeren Seite der ersten Schale (11) platziert ist.

8. Sonnenblendenbaugruppe nach Anspruch 7, die ausgebildet ist, um mit einem Tragarm (7) korrespondierend zu einer zweiten kürzeren Seite der ersten Schale, entgegengesetzt zu der ersten kürzeren Seite der ersten Schale, verbunden zu sein.

9. Sonnenblendenbaugruppe nach Anspruch 8, wobei das zweite Paar von Führungsschienen (12) ein Aufnahmeende aufweist, das ausgebildet ist, um die Abdeckung aufzunehmen, wobei das Aufnahmeende des zweiten Paares von Führungsschienen (12) im Wesentlichen korrespondierend zu der ersten kürzeren Seite der ersten Schale platziert ist.

10. Sonnenblendenbaugruppe nach einem der vorhergehenden Ansprüche, wobei die Spiegelrückhalteeinrichtung (5) mindestens ein Element aufweist, das sich zwischen den Führungsschienen des ersten Paares von Führungsschienen (11) befindet und ausgebildet ist, zu ermöglichen, dass der Spiegel problemlos entlang dem ersten Paar von Führungsschienen hin zur Spiegelposition bewegt wird, und anschließend zu verhindern, dass der Spiegel entlang dem ersten Paar von Führungsschienen aus der Spiegelposition bewegt wird.

11. Sonnenblendenbaugruppe nach Anspruch 10, wobei das mindestens eine Element mindestens einen Vorsprung aufweist, der sich von der inneren Hauptfläche der ersten Schale nach oben erstreckt, und zwar zwischen den Führungsschienen des ersten Paares von Führungsschienen.

12. Sonnenblendenbaugruppe nach Anspruch 11, wobei das mindestens eine Element mindestens zwei Vorsprünge aufweist.

13. Sonnenblendenbaugruppe nach einem der Ansprüche 11 und 12, wobei der mindestens eine Vorsprung mindestens einen "Delphin-Clip" aufweist.

14. Sonnenblendenbaugruppe nach einem der vorhergehenden Ansprüche, wenn kombiniert mit Anspruch 2,
weiter aufweisend einen Rahmen (6), der ausgebildet ist, über einer Außenfläche der zweiten Schale (2) korrespondierend zur Öffnung (21) aufgebracht zu werden, wobei der Rahmen eine Befestigungseinrichtung (61) aufweist, die ausgebildet ist, um mit einer ein Gegenstück bildenden Befestigungseinrichtung (102) zu interagieren, die einen Teil der ersten Schale (1) bildet, so dass der Rahmen an der ersten Schale (1) befestigt wird.

15. Sonnenblendenbaugruppe nach einem der vorhergehenden Ansprüche, wobei die zweite Schale (2) mindestens ein Blockierelement (22) aufweist, das ausgebildet ist, um zu verhindern, dass sich die Abdeckung um mehr als eine vorbestimmte Strecke weg von der Spiegelposition bewegt, wenn die Sonnenblende, mit in dem zweiten Paar von Führungsschienen (12) angeordneter Abdeckung, zusammengebaut ist.

16. Sonnenblendenbaugruppe nach einem der vorhergehenden Ansprüche, wobei die erste Schale weiter eine Einrichtung (13) aufweist, die verhindert, dass der Spiegel und die Abdeckung weiter als bis zu einer vorbestimmten Position entlang den jeweiligen Paaren von Führungsschienen (11, 12), in Einführrichtung des Spiegels und der Abdeckung in die Paare von Führungsschienen, bewegt werden.

17. Sonnenblendenbaugruppe nach einem der vorhergehenden Ansprüche, wobei die zweite Schale (2) mindestens eine Abdeckungstragrippe (23) aufweist, die ausgebildet ist, die Abdeckung zu tragen, wenn die Abdeckung weg von der Position verschoben ist, in der sie den Spiegel verdeckt, um diese weiter davon abzuhalten, sich in Richtung senkrecht zu der inneren Hauptfläche der ersten Schale zu bewegen, um durch die Abdeckung verursachte Vibrationen und/oder Geräusch zu verringern.

18. Sonnenblendenbaugruppe nach einem der vorhergehenden Ansprüche, wobei sowohl die erste Schale als auch die zweite Schale Kunststoffelemente sind, die durch Formgießen erhalten werden.

19. Sonnenblendenbaugruppe nach einem der vorhergehenden Ansprüche, wobei die erste Schale, einschließlich des ersten Paares von Führungsschienen und des zweiten Paares von Führungsschienen, ein einziges formgegossenes Bauteil ist.

20. Sonnenblende, aufweisend die erste und die zweite Schale der Sonnenblendenbaugruppe nach einem der vorhergehenden Ansprüche, und zwar zusammengebaut, mit einem in der Spiegelposition in dem ersten Paar von Führungsschienen angeordneten Spiegel, und mit einer Abdeckung, die in dem zweiten Paar von Führungsschienen angeordnet ist.

21. Sonnenblende nach Anspruch 20, wobei der Spiegel weiter an der ersten Schale (1) mittels eines Klebstoffs (31) befestigt ist.

22. Sonnenblende nach Anspruch 20 oder 21, weiter aufweisend einen Rahmen (6) der korrespondierend zu einer Außenfläche der zweiten Schale angeordnet ist und an der ersten Schale (1) befestigt ist, und zwar hindurch durch eine Öffnung (21) in der zweiten Schale korrespondierend zum Spiegel.

23. Verfahren zum Zusammenbau einer Sonnenblende, das die Schritte umfasst:
Einführen eines Spiegels (3) in das erste Paar von Führungsschienen (11) der ersten Schale (1) einer Sonnenblendenbaugruppe nach einem der Ansprüche 1 bis 19, und gleitendes Verschieben des Spiegels in eine Spiegelposition, in der er durch die Spiegelrückhalteeinrichtung (5) zurückgehalten wird;
Einführen einer Abdeckung in das zweite Paar von Führungsschienen (12) der ersten Schale und gleitendes Verschieben von dieser, bis sie oberhalb des Spiegels platziert ist;
und
Befestigen der zweiten Schale (2) der Sonnenblendenbaugruppe an der ersten Schale.

24. Verfahren nach Anspruch 23, das weiter den Schritt umfasst, bei dem ein Rahmen (6) korrespondierend zu einer Öffnung (21) in der ersten Schale aufgebracht wird, so dass der Rahmen an der ersten Schale (1) durch eine Befestigungseinrichtung (61, 102) befestigt wird, der jeweils mit dem Rahmen und der ersten Schale in Verbindung steht.

## Revendications

1. Assemblage de pare-soleil comprenant une première coque (1) et une seconde coque (2) conçues pour être couplées l'une à l'autre et comprenant des moyens de connexion (101) pour maintenir lesdites première et seconde coques couplées l'une à l'autre après qu'elles ont été assemblées l'une à l'autre, de sorte à constituer une structure de corps du pare-soleil,
la première coque (1) comprenant une seconde paire de rails de guidage (12) pour guider un cache (4) le long d'une partie au moins de ladite première coque jusqu'à une position dans laquelle le cache est placé sur un miroir de sorte à couvrir le miroir,
ladite seconde paire de rails de guidage étant conçue pour empêcher un mouvement du cache dans une direction perpendiculaire à une surface principale intérieure de la première coque,
**caractérisé en ce que** ladite première coque (1) comprend en outre une première paire de rails de guidage (11) pour guider le miroir (3) le long d'une partie au moins de ladite première coque jusqu'à une position de miroir, et des moyens de retenue (5) pour retenir ledit miroir dans ladite position de miroir ; ladite première paire de rails de guidage (11) étant conçue pour empêcher un mouvement du miroir dans une direction perpendiculaire à ladite surface principale intérieure de la première coque.

2. Assemblage de pare-soleil selon la revendication 1, dans lequel la seconde coque (2) est munie d'une ouverture (21) agencée pour être disposée en correspondance avec le miroir lorsque lesdites première (1) et seconde (2) coques sont couplées ['une à l'autre avec un miroir (3) dans la position de miroir.

3. Assemblage de pare-soleil selon l'une des revendications précédentes, dans lequel la seconde paire de rails de guidage (12) est placée sur la première paire de rails de guidage (11).

4. Assemblage de pare-soleil selon l'une des revendications précédentes, dans lequel la seconde paire de rails de guidage (12) est alignée avec la première paire de rails de guidage (11).

5. Assemblage de pare-soleil selon l'une des revendications précédentes, dans lequel lesdites première (11) et seconde (12) paires de rails de guidage s'étendent sensiblement de façon longitudinale le long d'une surface principale intérieure de ladite première coque (1).

6. Assemblage de pare-soleil selon l'une des revendications précédentes, dans lequel ladite première paire de rails de guidage (11) a une extrémité de réception conçue pour recevoir le miroir (3).

7. Assemblage de pare-soleil selon la revendication 6, dans lequel ladite extrémité de réception de ladite première paire de rails de guidage (11) est placée sensiblement en correspondance avec un premier côté court de la première coque (1).

8. Assemblage de pare-soleil selon la revendication 7, conçu pour être relié à un bras support (7) en correspondance avec un second côté court de la première coque, opposé audit premier côté court de ladite première coque.

9. Assemblage de pare-soleil selon la revendication 8, dans lequel ladite seconde paire de rails de guidage (12) a une extrémité de réception conçue pour recevoir le cache, ladite extrémité de réception de ladite seconde paire de rails de guidage (12) étant disposée sensiblement en correspondance avec ledit premier côté court de la première coque.

10. Assemblage de pare-soleil selon l'une des revendications précédentes, dans lequel lesdits moyens de retenue du miroir (5) comprennent au moins un élément situé entre les rails de guidage de ladite première paire de rails de guidage (11) et conçu pour permettre au miroir de passer facilement le long de ladite première paire de rails de guidage en direction de ladite position de miroir, et pour empêcher ensuite le miroir d'être déplacé le long de ladite première paire de rails de guidage hors de la position de miroir.

11. Assemblage de pare-soleil selon la revendication 10, dans lequel ledit au moins un élément comprend au moins une saillie s'étendant vers le haut depuis ladite surface principale intérieure de la première coque, entre les rails de guidage de ladite première paire de rails de guidage.

12. Assemblage de pare-soleil selon la revendication 11, dans lequel ledit au moins un élément comprend au moins deux saillies.

13. Assemblage de pare-soleil selon la revendication 11 ou 12, dans lequel ladite au moins une saillie comprend au moins un clip dauphin.

14. Assemblage de pare-soleil selon l'une des revendications précédentes associée à la revendication 2, comprenant en outre un cadre (6) conçu pour être appliqué sur une surface extérieure de ladite seconde coque (2) en correspondance avec ladite ouverture (21), ledit cadre comprenant des moyens d'attache (61) conçus pour coopérer avec des moyens d'attache complémentaires (102) faisant partie de ladite première coque (1) de sorte à attacher ledit cadre à ladite première coque (1).

15. Assemblage de pare-soleil selon l'une des revendications précédentes, dans lequel ladite seconde coque (2) comprend au moins un élément de blocage (22) conçu pour empêcher le cache d'être déplacé plus qu'une distance prédéterminée depuis la position de miroir lorsque le pare-soleil est assemblé avec ledit cache disposé dans ladite seconde paire de rails de guidage (12).

16. Assemblage de pare-soleil selon l'une des revendications précédentes, dans lequel ladite première coque comprend en outre des moyens (13) pour empêcher le miroir et le cache d'être déplacés au-delà d'une position prédéterminée le long de la paire de rails de guidage respective (11, 12) dans une direction d'insertion dudit miroir et dudit cache à l'intérieur desdites paires de rails de guidage.

17. Assemblage de pare-soleil selon l'une des revendications précédentes, dans lequel ladite seconde coque (2) comprend au moins une nervure support de cache (23) conçue pour supporter ledit cache lorsque le cache est écarté de la position dans laquelle il recouvre le miroir, de sorte à empêcher en outre qu'il soit déplacé dans une direction perpendiculaire à ladite surface principale intérieure de la première coque en vue de réduire les vibrations et/ou bruits causés par le cache.

18. Assemblage de pare-soleil selon l'une des revendications précédentes, dans lequel ladite première coque et ladite seconde coque sont toutes les deux des éléments en matière plastique obtenus par moulage.

19. Assemblage de pare-soleil selon l'une des revendications précédentes, dans lequel ladite première coque, y compris ladite première paire de rails de guidage et ladite seconde paire de rails de guidage, est un composant moulé d'une seule pièce.

20. Pare-soleil comprenant ladite première coque et ladite seconde coque de l'assemblage de pare-soleil selon l'une des revendications précédentes, assemblées l'une à l'autre, avec un miroir disposé dans ladite position de miroir dans ladite première paire de rails de guidage, et avec un cache disposé dans ladite seconde paire de rails de guidage.

21. Pare-soleil selon la revendication 20, dans lequel ledit miroir est en outre collé à ladite première coque (1) par un adhésif (31).

22. Pare-soleil selon la revendication 20 ou 21, lequel comprend en outre un cadre (6) disposé en correspondance avec une surface extérieure de la seconde coque et attaché à la première coque (1) par une ouverture (21) réalisée dans la seconde coque en correspondance avec le miroir.

23. Procédé d'assemblage d'un pare-soleil comprenant les étapes suivantes :
insertion d'un miroir (3) dans la première paire de rails de guidage (11) de la première coque (1) d'un assemblage de pare-soleil selon l'une des revendications 1 à 19, et coulissement du miroir jusqu'à une position de miroir dans laquelle il est retenu par lesdits moyens de retenue (5) ;
insertion d'un cache dans la seconde paire de rails de guidage (12) de ladite première coque et coulissement de celui-ci jusqu'à ce qu'il soit placé au-dessus du miroir ; et
fixation de ladite seconde coque (2) dudit assemblage de pare-soleil sur ladite première coque.

24. Procédé selon la revendication 23, lequel comprend en outre l'étape consistant à appliquer un cadre (6) en correspondance avec une ouverture (21) réalisée dans ladite seconde coque de sorte que ledit cadre est attaché à ladite première coque ('f) par des moyens d'attache (61, 102) associés respectivement audit cadre et à ladite première coque.
